Europäisches Patentamt

European Patent Office

Office européen des brevets

(11) Publication number : **0 462 824 A1**

## (12) EUROPEAN PATENT APPLICATION

(21) Application number : **91305556.2**

(22) Date of filing : **19.06.91**

(51) Int. Cl.⁵ : **F02M 25/08**

(30) Priority : **20.06.90 US 541271**

(43) Date of publication of application :
**27.12.91 Bulletin 91/52**

(84) Designated Contracting States :
**DE FR GB**

(71) Applicant : **BORG-WARNER AUTOMOTIVE, INC.**
**6700 18 1/2 Mile Road P.O.Box 8022**
**Sterling Heights, Michigan 48311-8022 (US)**

(72) Inventor : **Baron, Tibor**
**704 Medinah Ct., Apt. B.**
**Dixon, Illinois 61021 (US)**

(74) Representative : **Allden, Thomas Stanley et al**
**A.A. THORNTON & CO. Northumberland**
**House 303-306 High Holborn**
**London WC1V 7LE (GB)**

(54) Proportional solenoid valve controlled evaporative emissions purge system.

(57) An evaporative emissions purge system utilizes a proportional solenoid valve (20,220) to control the purge or flow of vapors from the canister (14,114) to the engine manifold (24). The proportional solenoid valve provides a precise fluid flow control and simplifies the overall system. The proportionaly solenoid valve may also be combined with the canister flow control diaphragm (21) assembly and the vacuum regulation assembly (106) to obtain a single, multifunctional unit for enhanced performance and cost savings.

EP 0 462 824 A1

**Fig. 2**

## BACKGROUND OF THE INVENTION

### Field of the Invention

This invention relates to automotive evaporative emissions recovery and purge systems. More particularly, this invention relates to an evaporative emission purge system controlled by a proportional solenoid valve. The proportional solenoid valve is useful in producing precise fluid flow from a purge canister over a wide range of differential pressures in a generally linear relationship to an electrical current input and can be calibrated to generate large flow rates at minimal current levels.

### Description of the Prior Art

Automotive evaporative emission control systems are widely used to capture, contain and eliminate hydrocarbon vapors associated with the storage of gasoline in automobiles. Hydrocarbon vapors arise from the natural evaporation of certain lighter chains of hydrocarbon molecules occurring at ambient pressures and temperatures. Such vapors, if not captured, tend to escape to the atmosphere and undergo complex chemical reactions with air in the presence of sunlight, thereby creating significant air quality degradation and subsequent health risks to the general population. Further, these lighter chains of hydrocarbons, especially benzene, have been found to be carcinogenic and, accordingly, a health hazard.

Evaporative emission control systems provided in automobiles attempt to capture and contain hydrocarbon vapors arising from gasoline stored on-board the vehicle (primarily the fuel tank and carburetor flow bowls, if so equipped). Further, environmental and regulatory pressures are promoting the capture of hydrocarbon vapors released during the refueling process by means of "on board" vapor recovery systems.

Once contained, generally by the use of activated charcoal placed in a canister storage vessel, the hydrocarbons must then be removed from the automobile so as to allow the containment of subsequently generated vapors. This process is generally known as "purging" and involves the introduction of air into the storage vessel. The hydrocarbons deposited on the activated charcoal in a gaseous state are released and hydrocarbon vapors are introduced into the engine intake manifold for controlled combustion. The emissions are thereby eliminated avoiding release into the atmosphere.

Purge systems which are known and used in the art typically employ on/off solenoid valves responsive to signals such as engine intake manifold vacuum and electrical signals from the vehicle's on-board emission control computer. The on/off solenoid is used to activate a diaphram/valve assembly on the canister storage vessel. The engine vacuum then is used to draw vapors from the vessel, through a series of control orifices, into the intake manifold for controlled combustion.

On/off solenoids, or plunger-type valves, are electromechanical devices that translate a plunger within a housing, so as to alternatively open or close a passage allowing or terminating a fluid flow (in this case, a vacuum signal). The plunger, acting against a valve seat to achieve its function, oscillates between its two position extremes at a frequency matching that of the electrical control signal. In the past, these frequencies have been about 80 Hz.

However, recent trends have made plunger-type valves unsatisfactory. First, the recent interest in "onboard" vapor recovery capabilities have dramatically increased the purge rate at which evaporative emission control systems must operate. The additional system loading requires relatively high purge flow rates (140 liters per minute, as opposed to 70 liters per minute). This in turn requires system orifices and communication channels to be enlarged so as to provide lower flow resistance. These greater orifice sizes throughout the system therefore require larger plunger-type valve armatures to effectively seat the enlarged solenoid valve. The greater armature size has limited the application of plunger-type solenoids where large fluid flow rates are desired, owing to the larger plunger mass, greater inertial forces generated and higher signal strengths needed.

Complicating the utility of plunger-type valves are the increased signal frequencies employed by on-board emission control computers. Whereas 80 Hz has been considered standard by the industry, many manufacturers are requiring signal frequency compatibility with 140 Hz. Plunger-type valves, especially those enlarged to accommodate larger flow rates, are difficult to adapt to the higher frequency, again owing to larger inertial forces and higher signal strengths needed.

A problem related to both of the above limitations is that of objectable noise created by contact of the plunger-type valve with the valve seat at frequencies of 80 to 140 Hz.

Therefore, the present invention avoids these shortcomings by providing a system which integrates the use of a proportional solenoid valve assembly. Such a system allows higher flow rates linearly related to input current at high frequencies due to the low inertial mass of the armature, without objectionable noise and simplification of the purge system configuration.

## SUMMARY OF THE INVENTION

In accordance with one embodiment of this invention, a vapor recovery system for transmission of vapors from a vapor source, such as a fuel tank or carburetor bowl, to a vapor combustion chamber includes a canister for storage of vapors. The canister is connected by a fluid line to the fuel tank to allow vapors to leave the tank and be stored in the canister, under appropriate conditions. The canister also includes a fluid inlet connected to a high pressure source, or atmospheric pressure, and a fluid outlet connected to a relatively lower pressure, or vacuum source, such as engine manifold vacuum. A conduit is provided for passage of fluid from the high pressure source, through the canister, to the low pressure source. In this manner, vapors are purged from the canister into the engine manifold for combustion.

A control means is provided for controlling the opening and closing of the conduit and thereby control the movement of fluid from the canister into the combustion chamber. The control means includes a proportional solenoid valve, in combination with a fluid pressure regulator, which has an electrical current input from the electronic control module in the automobile, as well as fluid inputs from atmospheric pressure and the vacuum source. Energization of the solenoid by varying the electrical current to the solenoid winding provides an output differential pressure, which is a controlled result of the inputs of atmospheric pressure and the vacuum source. The output differential pressure is, in turn, utilized to control movement of a diaphragm in communication with the canister. Movement of the diaphragm permits opening and closing of the canister fluid conduit.

In this manner, the proportional solenoid valve provides control over the opening and closing of the canister to allow purging of the canister at the appropriate times. The system, which includes the proportional solenoid valve, is structured so that the vacuum signal to the canister can be connected to the vacuum signal to the proportional solenoid valve. Thus, the overall system is simplified and the system provides greater control over the purge process.

A second embodiment of this invention also includes a canister, a conduit for passage of fluid from the canister, and a control means. However, in the second embodiment, the control means, which further includes a proportional solenoid valve and a fluid pressure regulator, is incorporated with a diaphragm in communication with the canister. Thus, the control means of the second embodiment of the present invention is a single, integrated, multifunctional unit that controls the passage of the pressurized fluid. Thus, control can be obtained over the vapor recovery system via a remote, relatively inexpensive control means that allows higher flow rates substantially linearly related to input current supplied at high frequencies.

## BRIEF DESCRIPTION OF THE DRAWINGS

For a more complete understanding of this invention, one should refer to the embodiments illustrated in greater detail in the accompanying drawings and described below by way of examples of the invention. In the drawings:

FIG. 1 is a schematic of the controlled evaporative emission purge system of the present invention, showing the piping between the vapor source and throttle body, or engine manifold;

FIG. 2 is a diagrammatic view of the purge system showing the signal ports for vacuum;

FIG. 3 is a sectional view of the proportional solenoid valve shown in FIG. 2.

FIG. 4 is a sectional view of the canister storage vessel shown in FIG. 2;

FIG. 5 is a graphical illustration of the response of the system of the invention.

FIG. 6 is a sectional view of the purge system according to the second embodiment of the present invention, showing the control means incorporating the proportional solenoid valve, the fluid pressure regulator and the canister diaphragm apparatus into a single integrated assembly according to the present invention.

FIG. 7 is a detailed sectional view of the canister diaphragm apparatus and the fluid pressure regulator shown in the sectional view of FIG. 6, according to the present invention.

FIG. 8 is a sectional view of the proportional solenoid valve, taken along line B-B of FIG. 6, according to the present invention.

FIG. 9 is a detailed sectional view of the canister diaphragm apparatus and the fluid pressure regulator, taken along line C-C of FIG. 6, according to the second embodiment of the present invention.

It should be understood that the drawings are not necessarily to exact scale and that certain aspects of the embodiments are illustrated by graphic symbols, schematic representations and fragmentary views. It should also be understood that when referring to physical relationships of components by terms such as "upper", "lower", "upward", "downward", "vertical", "horizontal", "left", "right" or the like, such terms have reference solely to the orientation depicted in the drawings, Actual embodiments or installations thereof may differ. It should also be understood that the term "passageway" is not necessarily limited to a tubular path but may encompass communicating spaces, chambers and the like.

While much mechanical detail, including other plan and section views of the particular embodiment depicting have been omitted, such detail is not per se part of the present invention and is considered well within the comprehension of those skilled in the solenoid arts in the light of the present disclosure. The resulting simplified presentation is believed to be more readable and informative and readily understandable by those skilled in the art. It should also be understood, of course, that the invention is not limited to the particular embodiments illustrated.

## DETAILED DESCRIPTION OF THE DRAWINGS

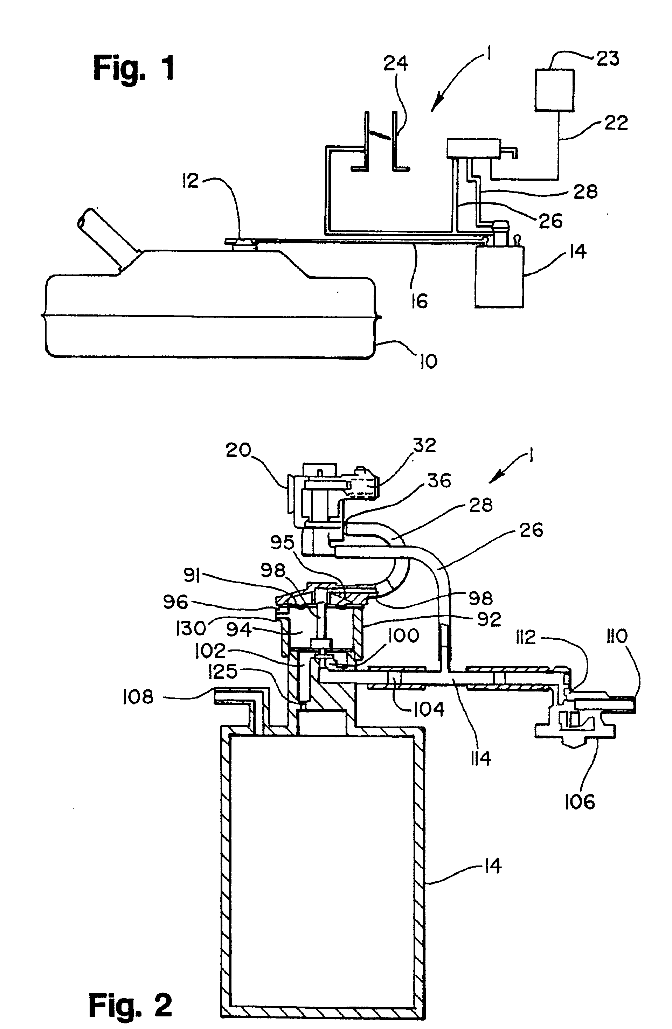

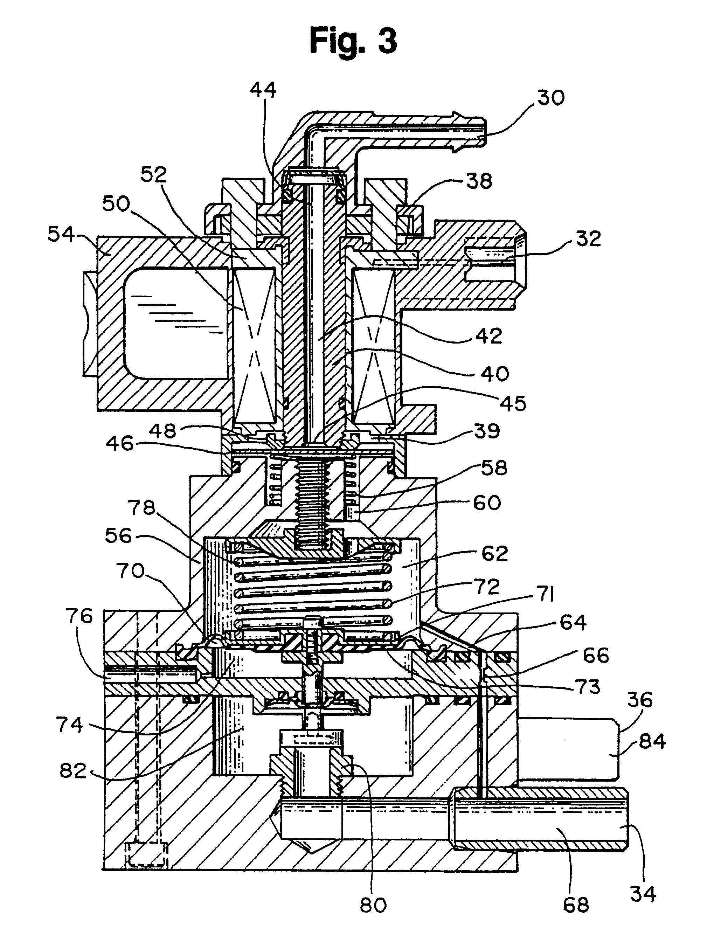

Turning now to the drawings, wherein like or similar characters refer to like or similar characters throughout the views, a schematic of the controlled evaporative emission purge system 1 of the present invention is shown in Figure 1. The system 1 is designed for control of evaporative emissions, or vapors, from the fuel tank 10, or vapor source. The tank 10 includes a pressure relief valve 12 and is connected to a canister 14 by a conduit or tube 16. The canister 14 is the storage vessel for the vapors, and is shown in greater detail in Figure 3. Vapors are released from the tank 10 for storage in the canister 14 under appropriate flow conditions.

The canister 14 is also connected to a proportional solenoid valve 20. The proportional solenoid valve 20 provides the control for the purging of the canister. The valve 20 includes an electrical input 22, from electronic control module 23, as well as a vacuum signal input from the engine manifold, shown schematically as throttle body 24, by means of conduit 26. As explained in detail below, control of the electrical input 22 to the proportional solenoid valve 20 provides a differential pressure output to the canister 14 through conduit 28, which controls the opening and closing of the canister 14 to allow passage of vapors from the tank 10 to the engine manifold 24. The conduits provide an operative connection, that is, a connection to permit the passage of fluid.

The purge control system 1 thus contains two main components -- a proportional solenoid valve 20 and a canister 14. These components allow the storage of vapors in the canister 14 and controlled purge from the canister 14 to the engine for combustion. The proportional solenoid valve 20 and canister 14 will each be described in detail.

One embodiment of the purge control system 1 is shown in more detail in the diagram of Figure 2. The proportional solenoid valve 20 has three inputs. The first input is atmospheric pressure through port 30, shown in Figure 3. The second input is the electrical signal input through terminal 32. The third input is the vacuum source signal from conduit 26 into port 34. The output from the proportional solenoid valve is through port 36, which provides a means for accessing or utilizing the pressure differential created within the valve. The output port 36 is connected to the canister diaphragm assembly 90 by conduit 28.

The proportional solenoid valve 20, more clearly shown in Figure 3, includes a plurality of adjacent magnetic segments which act to define a magnetic flux circuit with a flux path. Proportional solenoid valves of this type are the subject matter of U.S. Patents 4,534,375 and 4,715,396, each issued to Clarence D. Fox, and Application Serial No. 333,995, filed April 5, 1989, to Tibor Baron, which are incorporated herein by reference. The magnetic segments include an iron outer member or mounting bracket (not shown), which extends along the length of the valve between the top portion 38 and the bottom portion 39. Also in the magnetic flux circuit is the generally cylindrical center member 40. The center member has a hollow passageway to define a fluid passage 42 with an inlet port 44 and an outlet port 45. The fluid passage 42 is preferably vented to atmosphere through port 30. The center member 40 is of iron or other ferromagnetic material.

Completing the magnetic flux circuit is the magnetic closure member 46, which is a flat disc armature. The flux circuit is therefore through the center member 40, the armature 46 and through the bracket from the bottom portion to the top portion. The armature 46 is also of iron or other ferromagnetic material.

At the base of the center member 40 is a nonmagnetic seat member 48 which extends around the center member 40. The armature 46 rests against the seat member 40 in its uppermost position, thus providing an air gap between the armature 26 and the center member 40. The center member 40 is preferably translatable along its center axis and thereby allows adjustment of the air gap distance.

An electrical winding 50 is mounted about the center member 40. The winding 50 is encased on its upper, lower and inner diameter surfaces in a bobbin 52 which is utilized to contain the center member 40. The electrical winding 50 is connected to the terminal 32. The terminal 32 is connected to a suitable electronic control module 23 which can supply electric current to the winding 50. The electronic control module 23 can be a direct current source, a square wave generator, a variable resistor, a pulse width modulation circuit, or, preferably, an automobile on-board computer functioning as a signal source.

The terminal 32 and bobbin 52 are maintained in operative relationship by an upper housing 54. The upper housing 54 is connected to a lower housing 56, which houses the pneumatic ports 34, 36. Beneath the armature 46, within the lower housing 56, is spring 58, which maintains the armature 46 in a position against the seat member 48.

A first fluid conduit 60 connects the fluid passage 42 with the inside of the lower housing 56. The first conduit 60 allows passage of fluid at atmospheric pressure through port 30 and passage 42 and past armature 46 into a first, or upper, fluid chamber 62. Access to chamber 62 is provided by a second fluid conduit 64 which is preferably connected to a vacuum source by third conduit 68, which ends in port 34. By these connections, the upper chamber 62 receives a differential pressure (e.g., preferably between atmospheric pressure and 3 in. Hg. of vacuum) between the fluid at atmospheric pressure vented through port 30 and the fluid at a pressure below atmospheric pressure, or vacuum, vented through port 34. The second conduit 64 includes a restriction or orifice 66 which acts to limit the fluid flow within the valve assembly. The restriction 66 is of cross sectional area which is substantially smaller than the cross sectional area of the fluid passage 42 through the center member. Thus, the diameter 62 vacuum is limited to 3 in Hg.

A diaphragm 70 extends across a portion of the base of chamber 62. The diaphragm 70 has a first face 71 forming one wall of the chamber 62 and a second face 73 forming one wall of a second chamber 74. The flexible diaphragm 70 is operatively connected to a stem 72. The second chamber 74, thus formed beneath the diaphragm 70, is vented to atmospheric pressure through conduit 76. The diaphragm 70 is forced toward the second chamber 74, in part by spring 78. The diaphragm 70 has a tendency to move toward the upper chamber 62 on account of the pressure differential of fluid at atmospheric pressure in chamber 74 and fluid at a pressure below atmospheric pressure in chamber 62 acting on the faces 73 and 71, respectfully, of the diaphram 70.

The stem 72 rests against a seat 80 to prevent flow between conduit 68 and third chamber 82. Movement of the diaphragm 70 is effective to cause movement of the stem 72 away from the seat 80 permitting flow between conduit 68 and a third chamber 82. The third chamber 82 is connected to port 36 by conduit 84. Thus, movement of diaphragm 70 in response to changes in the differential pressure in the chamber 62 is effective to move stem 72 and allow a vacuum signal to reach port 36.

As shown in Figure 2, the vacuum signal from port 36 is connected by means of conduit 28 to the canister 14. The connection of the conduit 28 is at the top of the canister at port 88. Changes in the vacuum signal to port 88 are effective to cause movement of a canister diaphragm 91. The canister diaphragm 91 divides the canister cap 92 into a lower chamber 94 and an upper chamber 95. The lower chamber 94 is vented to atmosphere through port 96, while the upper chamber 95 is connected to the vacuum signal through port 88. Therefore, changes in the vacuum signal out of the proportional solenoid valve 20 are effective to cause movement of the canister diaphragm 91.

The canister diaphragm 91 is operatively connected to a valve stem 98, which rests against a seat 100. The stem 98 provides a mechanism to regulate flow from a conduit 102 to a conduit 104. When the stem 98 is lifted from the seat 100, fluid is permitted to flow from the canister 14 into the conduits 102, 104 and to the vacuum regulator 106. A vent to atmosphere from the canister at port 108 provides a high pressure source relative to the vacuum source of the engine. In this manner, flow occurs from the high pressure source at port 108, through the canister 14 and conduits 102, 104, through the vacuum regulator 106, to the engine manifold 24. The engine manifold is shown schematically in Figure 1, as throttle body 24.

The vacuum regulator 106 includes two ports 110, 112. The vacuum regulator is chosen from those commercially available and is designed to provide a constant vacuum output from a variable vacuum input above a specified regulation value, preferably at 4.5 in. Hg. Thus, the regulator 106 receives the variable vacuum source input at port 110 from the engine manifold 24 and provides a relatively constant vacuum output at port 112 for utilization in the proportional solenoid valve 20 and with the canister 14. The conduit 104 includes three-way connector 114 to connect conduit 26 with conduit 104 and thereby connect the proportional solenoid valve 20 with the canister 14 and the regulator 106.

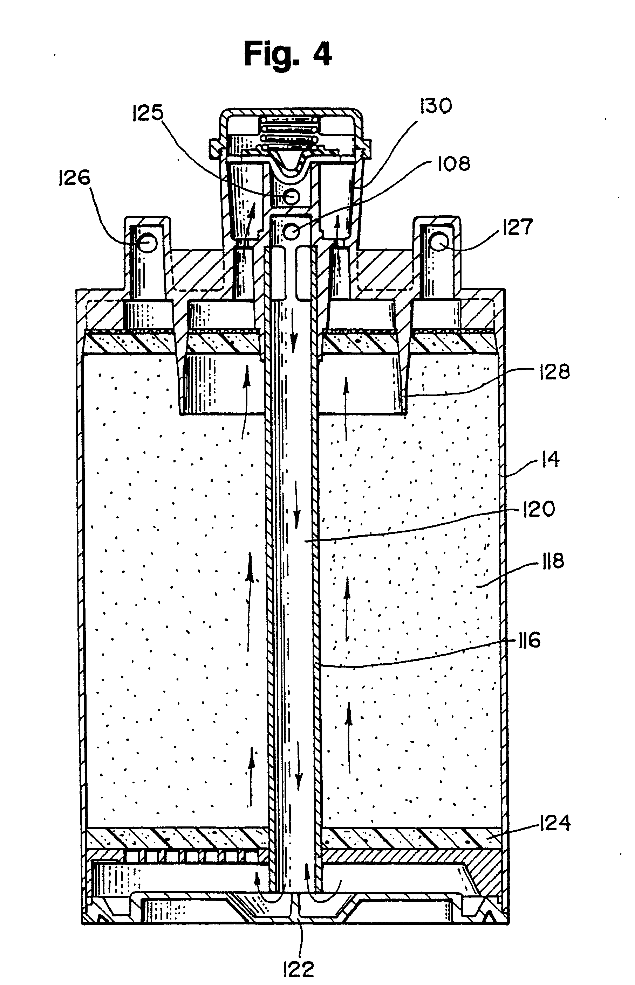

As shown in Figure 4, the canister 14 has a generally cylindrical body with a generally cylindrical standpipe 116 in its center. The standpipe 116 is surrounded by a carbon filter 118. The standpipe 116 includes a central passage 120. The carbon filter 118 is permeable to allow the passage of fluid, such as air and vapors through the filter. The standpipe 116 is spaced from the base 122 of the canister 14 in order to allow fluid to enter the lower portion of the standpipe. A foam filter 124 is also included near the base of the canister.

The canister 14 includes several inlet and outlet ports. An outlet port 125 permits fluid flow out of the canister under certain conditions. In addition to opening port 108 to atmospheric pressure, shown more clearly in Figure 2, the canister includes a port 126 for the entry of fuel tank vapors and a port 127 for entry of vapors from a carburetor bowl vent. The carburetor bowl vent port 127 may be capped for use of the system in a non-carbureted vehicle.

The ports 108, 126, 127 are located near the top of the canister. Also located near the top of the canister is an annular baffle 128, which directs the flow of vapors into the cap 92 of the canister. Once inside the cap 130, the fluid exits the canister through the conduits 102 and 104.

In operation, the system allows control of the purge system of the canister. Evaporative emission vapors from the fuel tank 10 are released by relief valve 12 and allowed to flow into the canister 14 by means of a conduit 16. The low pressure of the engine manifold, which acts upon the canister during the purge, assists the flow from the tank into the canister.

Once trapped in the canister, the vapors must be periodically purged from the canister 14 and sent into the engine intake manifold 24 for subsequent combustion. The activation of the purge system is controlled by the proportional solenoid valve 20. The solenoid valve activates the purge system by sending a differential pressure signal to the canister 14 and thereby moving the canister diaphragm 91.

To control the proportional solenoid valve 20, an electrical signal is sent from the electronic control 23 to the electrical winding 50 of the proportional solenoid valve 20 at an appropriate time for purge, as determined by the electronic control 23. Energization of the electrical winding 50 causes a modulation of the differential pressure in the fluid chamber 62 of the proportional solenoid valve. The fluid chamber 62 of the solenoid valve receives an input from atmospheric pressure at port 30 as well as an input from the vacuum source at port 34. Energization of the winding is effective to control the differential pressure in fluid chamber 62.

Modulation of the differential pressure in chamber 62 in turn modulates the movement of the solenoid valve diaphragm 70. Movement of the valve diaphragm 70 permits movement of stem 72, which allows the vacuum signal of the port 34 to be communicated to the port 36. The vacuum signal at port 34 is the engine manifold vacuum communicated to port 34 through vacuum regulator 106 and conduit 114 and conduit 26. The vacuum regulator 106 provides a relatively constant vacuum signal in conduit 114 from the variable low pressure, or vacuum source, of the engine intake manifold 24.

The movement of the stem 72 and communication of the vacuum signal at the port 34 to the port 36 allows further communication of that vacuum signal to the upper chamber 95 of the canister cap 92. Communication of the vacuum signal to the upper chamber 95 of the canister cap 92, with atmospheric pressure being vented into the lower chamber 94 through inlet 96, will result in movement of the canister diaphragm 91. Such movement of the canister diaphragm 91 will cause a movement of the stem 98 from the seat 100 and will open the conduit 102 to conduit 104 and permit passage to fluid.

With the connection of the conduit 102 to the conduit 104 by the lifting of the stem 98, a high pressure to low pressure flow condition will be created in the system. Atmospheric pressure, or relative high pressure, will be communicated to the canister 14 through the port 108. Engine intake manifold vacuum, or relative low pressure, will be communicated to the canister 14 through regulator 106, conduit 104 and conduit 102. As a result of the pressure differential across the canister 14, fluid will flow from the port 108 through the standpipe passage 120 and through the carbon filter 118 to the outlet port 125. Fluid flow will continue from outlet port 125 through conduit 102 and conduit 104, through the regulator 106, and eventually into the engine manifold 24 for combustion. In this manner, fluid vapors from the fuel tank, which have been stored in the canister, are released or purged from the canister 14 and delivered to the engine manifold 24 for controlled combustion.

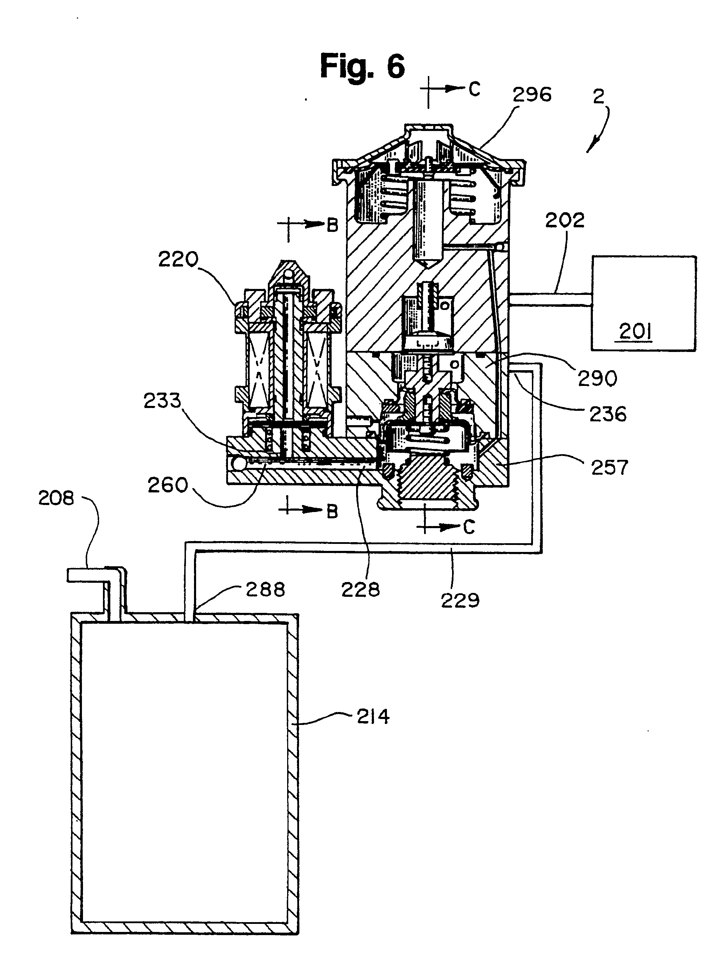

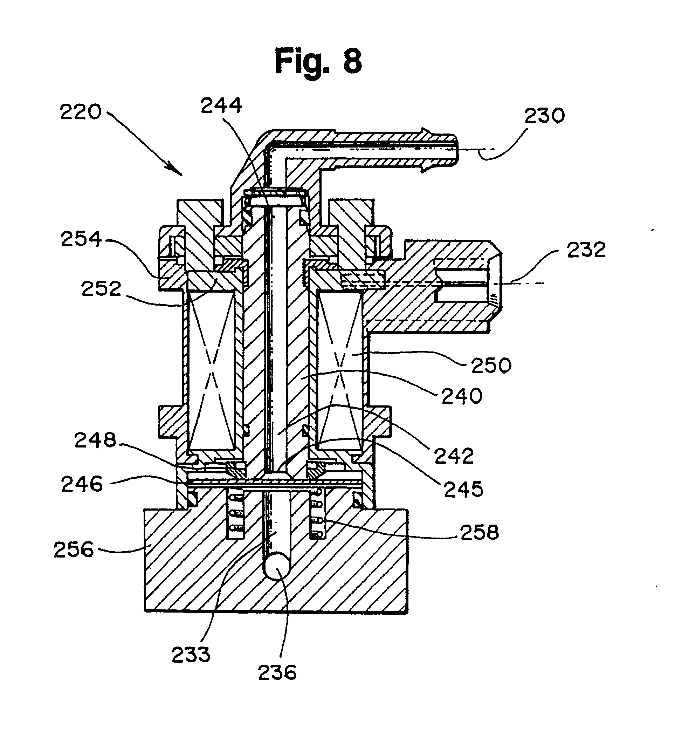

Referring now to Figure 6, the diagrammatic view of the purge system 2 according to a second embodiment of the present invention is shown. The proportional solenoid valve assembly 220 is provided with three inputs. The first input is atmospheric pressure through port 230, shown in Figures 6 and 8. The second input is the electrical signal input through terminal 232, which is best seen in Figure 8. Returning to Figure 6, the output from the proportional solenoid valve is through port 233, which provides a means for accessing or utilizing the pressure differential created within the valve. The output port 233 is connected to the integral canister diaphragm assembly 290 via passage 228.

The proportional solenoid valve 220, also shown in Figure 8, is of similar design and function as the proportional solenoid valve 20 discussed above. Valve 220 is also provided with magnetic segments including an iron outer member (not shown), a generally cylindrical center member 240 defining a hollow fluid passage 242 with an inlet port 244 and an outlet port 245. The fluid passage 242 is similarly preferably vented to atmosphere through port 230. The center member 240 is constructed of iron or other ferromagnetic material.

The magnetic flux is circuit is completed by the magnetic closure member 246, which is also a flat disc armature. The flux circuit is therefore through the center member 240, the armature 246 and the bracket. The armature 246 is also constructed of iron or other ferromagnetic material.

At the base of the center member 240 is a nonmagnetic seat member 248 which extends around the center member 240. The armature 246 rests against the seat member 248 in its uppermost position, which will be presently discussed, thus providing an air gap between the armature 246 and the center member 240. The center member 240 is preferably translatable along its center axis and thereby allows adjustment of the air gap distance.

An electrical winding 250 is mounted about the center member 240. The winding 250 is encased on its upper, lower and inner diameter surfaces in a bobbin 252 which is utilized to contain the center member 240. The electrical winding 250 is connected to the terminal 232. The terminal 232 is connected to a suitable electronic control module (not shown) to supply an electric current to the winding 250. The electronic control module can be a direct current source, a square wave generator, a variable resistor, a pulse width modulation circuit, or, preferably, an automobile on-board computer functioning as a signal source.

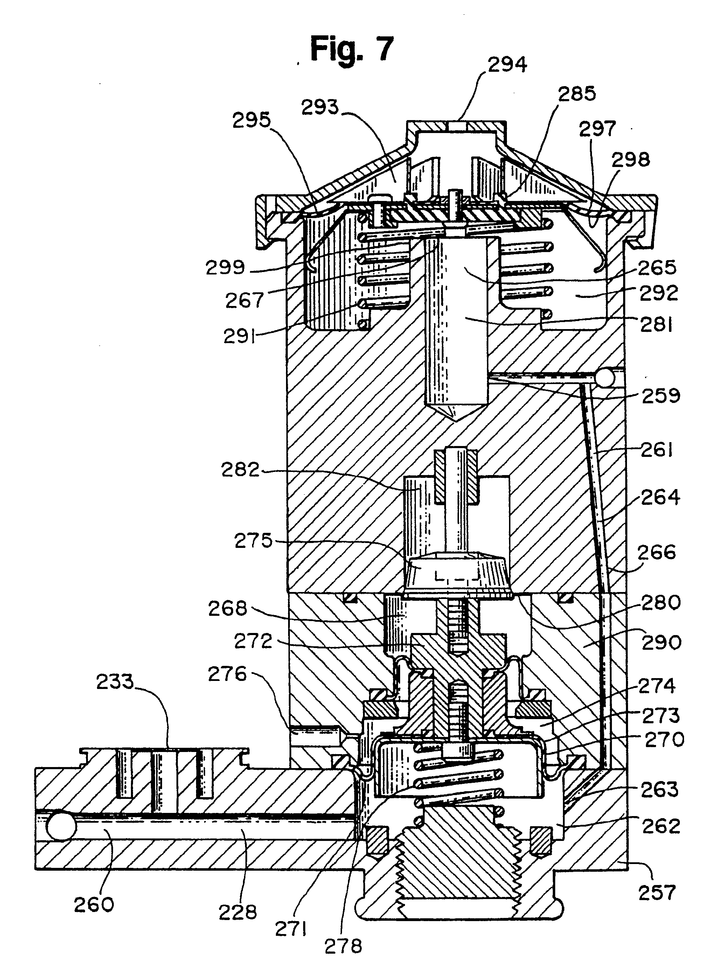

The terminal 232 and bobbin 252 are maintained in operative relationship by an upper housing 254. The upper housing 254 is connected to a lower housing 256, which is formed by a portion of base member 257, as seen in Figures 6 and 7. Lower housing 256 houses the port 233 and passage 228. Beneath the armature 246, within the lower housing 256, is spring member 258, which maintains the armature 246 in a position against the seat member 248.

A first fluid circuit 260, comprised of the outlet port 233 and the passage 228, connects the fluid passage 242 with the inside of the lower housing 256 of the base member 257. The first fluid circuit 260 allows passage of fluid at atmospheric pressure through port 230 and passage 242 and past armature 246 into a first fluid chamber 262, as best seen in Figure 7. Access to chamber 262 is provided, via by a second fluid circuit 264 including orifice 259, passage 261 and orifice 263, from a vacuum chamber 281. The vacuum chamber 281, in constant communication with the vacuum source 201, forms a portion of a third fluid circuit 265, which is further comprised of an inlet orifice 267 providing communication to a chamber 292 of a regulator assembly 296, which will be discussed presently, the inlet port 284, a conduit 202 and the vacuum source 201. Thus, the chamber 262 is provided with a vacuum pressure input from vacuum chamber 281 and an atmospheric pressure input from the proportional solenoid 220, such that the chamber 262 obtains a differential pressure between the vacuum pressure and the atmospheric pressure. The range of pressures for the chamber 262 is-preferably between atmospheric and about 3 in.Hg. by a restriction or orifice 266 which acts to limit the fluid flow of the second circuit 264. The restriction 266 is of cross sectional area which is substantially smaller than the cross sectional area of the fluid passage 242 through the center member 240, thus limiting the vacuum achievable in the chamber 262 to approximately 3 in.Hg. This range is particularly suitable for obtaining high resolution of the differential pressure changes sought in the chamber 262 to obtain a wide range of various flow rates and thus avoid the wide vacuum variations originating from the vacuum source 201.

A diagram 270 extends across a portion of the top of the chamber 262. The diagram 270 has a first face 271 forming one wall of the chamber 262 and a second face 273 forming one wall of a second chamber 274. The flexible diaphragm 270 is operatively connected to a balance seat member 272 and a balance seat valve 275. The balance seat valve selectively separates a chamber 268 and a chamber 282. The second chamber 274, thus formed above the diaphragm 270, is vented to atmospheric pressure through conduit 276. The diaphragm 270 is forced toward the second chamber 274 partially by the urging of a spring 278. The diaphragm 270 has a tendency to move toward the chamber 262 due to the higher pressure of chamber 274 acting on the face 273 of the diaphragm 270 compared to the lower pressure of chamber 262 acting on the face 271 of the diaphragm 270.

The spring 278, through the balance seat member 272, operatively causes the balance seat valve 275 to rest against a valve seat 280 to prevent flow between the chambers 282 and 268. Movement of the diaphragm 270 is effective to cause movement of the balance seat member 272 away from the valve seat 280 permitting flow between the chamber 282 and the chamber 268. The chamber 282 is connected to a port 236 in communication with the canister 214. Thus, movement of the diaphragm 270 in response to changes in the differential pressure in the chamber 262 is effective to move the balance seat valve 275 away from the seat 280 and allow a vacuum signal to reach the port 236. As shown in Figure 6, the vacuum signal from port 236 is connected by means of conduit 229 to the canister 214.

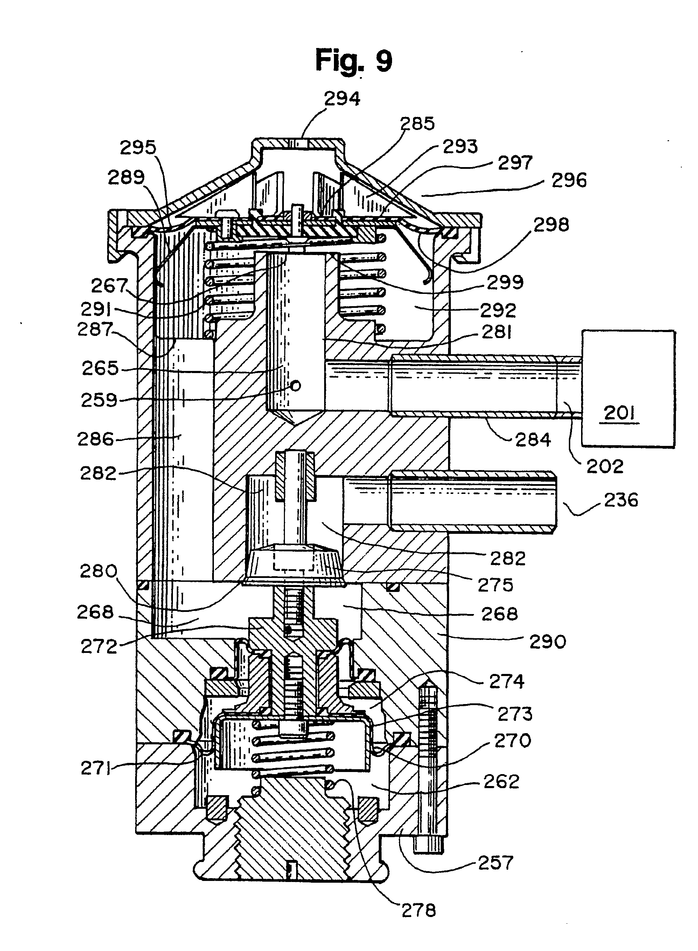

The canister 214 is thus in selective communication, via the port 236, the conduit 229 and a fitting 288, with the chamber 268, more clearly shown in Figure 9. When the balance seat valve 275 is moved away from the seat 280, the vacuum existing in the chamber 268 is allowed to reach the canister 214. Fluid from the canister, at about atmospheric pressure, is thereby caused to flow from the canister 214 via the fitting 288, the conduit 229, the port 236, the chamber 282 and the valve 275 into the chamber 268 due to the differential in pressure.

The chamber 268 is in turn supplied with the vacuum signal via the passage 286, the regulator assembly 296 and the third fluid circuit 265. The vacuum regulator is thus provided with a vacuum signal via port 284, the chamber 281, and the orifice 267 from the conduit 202 and the vacuum source 201, as best seen in Figure 9. The regulated vacuum signal is provided to the chamber 268 via an outlet orifice 287, a first chamber 292, the orifice 287, and the passage 286.

The regulator assembly 296 is further provided with two chambers, the first chamber 292 in communication with the vacuum signal from chamber 281 via the orifice 267 and a second chamber 293 in communication with the atmospheric pressure via an orifice 294. Separating the chambers 292 and 281 is a diaphragm 295, which is provided with a first face 296 forming one wall of the chamber 292 and a second face 297 forming one wall of the chamber 293. The flexible diaphragm 295 thus is positioned to separate the chamber 292 and the chamber 293, and is further provided with a sealing member 285. The chamber 293, thus formed above the diaphragm 270, is vented to atmospheric pressure through orifice 294. The diaphragm 295 is forced toward the chamber 293 by the urging of a four-pronged friction spring 289 (which has been found to dampen noise within the regulator assembly 296) and a helical spring 291. The diaphragm 295 has a tendency to move toward the chamber 292 due to the higher pressure of chamber 293 acting on the face 297 of the diaphragm 295 compared to the lower pressure of chamber 292 acting on the face 298 of the diaphragm 295. The springs 289 and 291, however, operatively urge the diaphragm 295 toward the chamber 293. When the vacuum signal is sufficiently large so that the pressure differential forces acting on the diaphragm 295 exceed the resilient forces created by the springs 289 and 291, the diaphragm 295 will move downward toward the chamber 292. At preferably about 4.5 in.Hg., the diaphragm 295 will have been displaced sufficiently downward so that sealing member 285, located above a valve seat 299 formed about the orifice 267, seals against the valve seat 299 closing the orifice 267 and terminates the communication the chambers 292 and 281. Thus, a vacuum signal greater than about 4.5 in Hg. is not be allowed to enter the chamber 292 and further enter via orifice 287 and passage 286 into the chamber 268.

By holding the vacuum signal to about 4.5 in.Hg., the valve assembly 2 of the present invention is capable of delivering a fluid flow from the canister 214 to the vacuum source 201 at the flow rate independent of the magnitude of a vacuum signal over 4.5 in.Hg. and dependant only on the linear relationship to the electrical current input.

The canister 214 is of the same general construction as the canister 14 describe above. However, outlet port 125, the cap 92, the cap 130, the conduit 102, and the conduit 104 of the canister 14 have been replaced by the fitting 288 and conduit 229 of the canister 214. The port 108 has also been substituted with the atmospheric port 208.

The regulator assembly 296 functions in like manner to the vacuum regulator 106. The regulator assembly 296 receives the variable vacuum source input from the port 284 by means of the chamber 281 and the orifice 267. The variable vacuum source input from the engine manifold 24 is converted, by the regulator assembly 296, into a relatively constant vacuum output from chamber 292 for utilization with the proportional solenoid valve assembly 220 and the canister 214.

In operation, the system allows control of the purge system of the canister 214. Evaporative emission vapors, as discussed above, are caused to flow into the canister 214. The purging process, controlled by the proportional solenoid assembly 220, operates by sending a differential pressure signal to the diaphragm 271 to displace the balance valve 275.

As noted earlier, to control the proportional solenoid valve assembly 220, an electrical signal is sent from the electronic control 23, as illustrated in Figure 1, to the electrical winding 250 of the solenoid assembly shown in Figure 8 at an appropriate time for purge, as determined by the electronic control 23. Energization of the electrical winding 250 causes a modulation of the differential pressure in the fluid chamber 262 of the lower housing 257, which in turn modulates the movement of the balance seat member 272 and the balance valve 275. Movement of the balance valve 275 allows the vacuum signal of the port 236 to be communicated to the port 284 through chamber 282, the valve 275, the chamber 268, the passage 286, the orifice 287, the regulator assembly 296, and the chamber 281. As noted earlier, the regulator assembly 296 provides a relatively constant vacuum signal in the chamber 292, the passage 286 and the chamber 268 from the variable low pressure, or vacuum source, of the engine intake manifold 24.

The movement of the balance valve 275 and communication of the vacuum signal at port 236 to the port 284 allows further communication of that vacuum signal to the conduit 229, fitting 288 and the canister 214. Atmospheric pressure, or relatively high pressure, will be communicated to the canister 214 via the atmospheric port 208. Engine manifold intake manifold vacuum, or relatively low pressure, will be communicated to the canister 214 through the port 236, the conduit 229 and the fitting 288. As a result of the pressure differential across the canister 214, fluid will flow from the port 208 though the canister 214 to the fitting 288. Fluid flow will continue from the fitting 288 through the conduit 229 into the port 236, which is in ultimate communication with the port 284 and the engine manifold 24.

As fluid is caused to flow from the canister 214 through the fitting 288 and the conduit 229, it enters the port 236 and continues to flow into the chamber 282. As the balance valve 275 is open, the fluid will continue to flow into the chamber 268 and thorough the passage 286 and orifice 287 into the chamber 292.

The higher pressure fluid originating in the canister 214 entering the regulator assembly 296 will cause the pressure in the chamber 292 to incrementally increase above the controlled vacuum of about 4.5 in.Hg. This increased pressure, acting against the face 298 of the diaphragm 295 and added to the effort of the spring 291, will cause the seat 285 to lift slightly away from the valve seat 299, opening the orifice 267. Thus, flow will be provided to the chamber 281 and the port 284 and the variable vacuum signal from the engine intake manifold 24 will be in communication with the chamber 292. As the pressure falls in the chamber 292, the seal 285 will again be brought into sealing engagement with the valve seat 299 at a vacuum of about 4.5 in.Hg. so as to maintain the relatively constant vacuum signal of the regulator assembly 296. This process is repeated as the fuel vapors from the vehicle, which had been stored in the canister, are released or purged form the canister and delivered to the engine manifold 24 for controlled combustion.

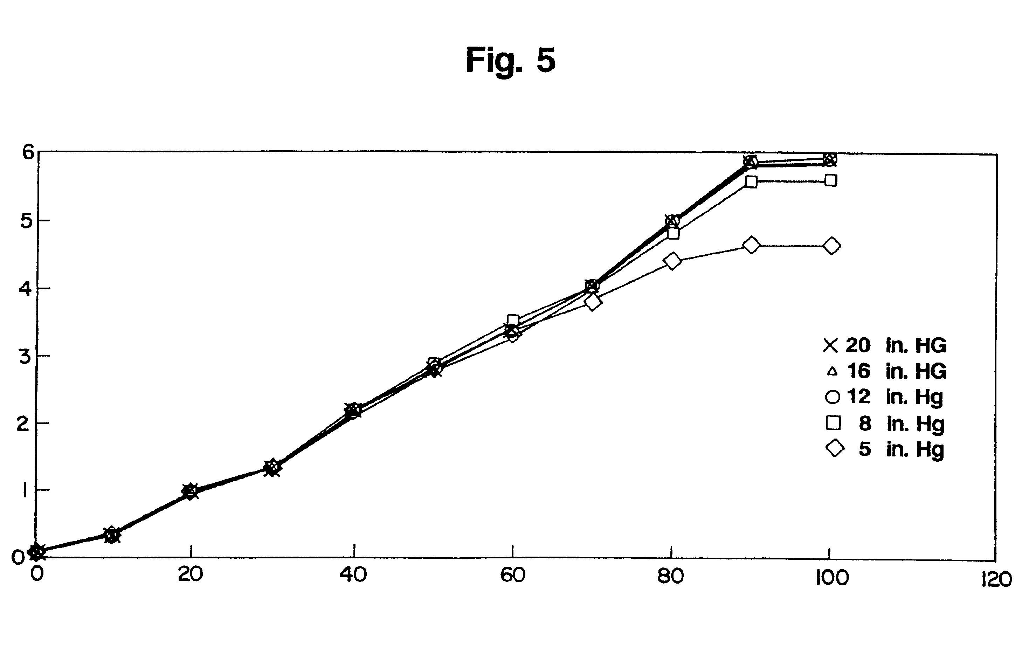

An empirical illustration of the change in flow (in liters per minute) as a function of the percent duty cycle at 140 Hz and 14 volts for the purge system of the first embodiment of the present invention is shown in Figure 5. The graph shows the relationship for various vacuum levels. This data is only representative of a sample plot with one embodiment of the purge system and is not intended to demonstrate any particular results other than the generally expected behavior of the system of the present invention.

Thus, the purge system of the present invention provides a system with greater control over the flow by the use of the proportional solenoid valve. The system allows control of flow without the need for high levels of vacuum signal. Additionally, the system utilizes the same vacuum signal to control the solenoid as well as to provide the low pressure source for the flow of the fluids out of the canister.

While embodiments of the invention are illustrated, it will be understood that the invention is not limited to these embodiments. Those skilled in the art to which the invention pertains may make modifications and other embodiments employing the principles of this invention, particularly upon considering the foregoing teachings.

## Claims

1. A vapor recovery system for transmission of vapors from a vapor source to a vapor combustion chamber comprising:

   a canister means for storage of vapors, said canister means having a fluid inlet operatively connected to a high pressure source, a fluid outlet operatively connected to a low pressure source, and conduit means for passage of fluid between said fluid inlet and said fluid outlet, and

   control means for opening and closing said conduit means to permit flow from said high pressure source to said low pressure source,

   said control means including a proportional solenoid valve means for providing an output differential pressure in controlled response to a variable electrical input, said proportional solenoid means including a first fluid input from said high pressure source and a second fluid input from said low pressure source,

   energization of said proportional solenoid valve by variation of the electrical input being effective to cause modulation of said output differential pressure and opening of said conduit means thereby permitting flow from said fluid inlet to said fluid outlet to provide transmission of vapors from said canister to said combustion chamber.

2. The vapor recovery system of claim 1 wherein said control means includes a diaphragm means for opening and closing said conduit means, displacement of said diaphragm means being controlled by modulation of said output differential pressure.

3. The vapor recovery system of claim 1 wherein said canister means is a generally cylindrical body member, said body member having a generally cylindrical standpipe member and a carbon filter portion disposed about said standpipe member,

   said conduit means including passage from said fluid inlet through said standpipe member and said carbon filter portion to said fluid outlet.

4. The vapor recovery system of claim 1 including a second conduit means connecting said fluid outlet to said low pressure source, said second conduit means including a vacuum regulator interconnected between said fluid outlet and said low pressure source.

5. A vapor recovery system for transmission of vapors from a vapor source to a vapor combustion chamber comprising:

   a canister means for storage of vapors, said canister means having a first fluid inlet operatively connected to a first high pressure source, a second fluid inlet operatively connected to a vapor source, a fluid outlet operatively connected to a low pressure source, conduit means for passage of fluid between said first fluid inlet and said fluid outlet, and a control means for opening and closing said conduit means to permit flow from said first high pressure source to said low pressure source,

   said control means including a proportional solenoid valve means for providing an output differential pressure in controlled response to a variable electrical input, said proportional solenoid means including an input from a second high pressure source and an input from said low pressure source,

   energization of said solenoid valve by variation of the electrical input being effective to cause modulation of said output differential pressure and opening of said conduit means thereby permitting flow from said fluid inlet to said fluid outlet to provide transmission of vapors from said vapor source to said combustion chamber.

6. A vapor recovery system of claim 1 wherein said control means comprises an integral module, said module further including said proportional solenoid valve means.

7. The vapor recovery system of claim 6 wherein said integral module of said control means further includes a valve means,

   said valve means selectively allowing fluid flow from said fluid inlet to said fluid outlet, and

   said valve means displacement being controlled by the modulation of said output differential pressure.

8. The vapor recovery system of claim 6 wherein said integral module further includes pressure regulating means for regulating the pressure in an interior portion of said conduit means, said pressure regulating means further including a regulating diaphragm means for opening and closing said conduit means and a diaphragm biasing means, displacement of said regulatory diaphragm means being controlled by said fluid output pressure and said diaphragm biasing means.

9. The vapor recovery system of claim 8 wherein said regulating diaphragm means includes a regulating diaphragm member disposed between a plurality of regulatory chambers, a first of said regulatory chambers being operatively connected to said interior portion of said conduit means.

10. The vapor recovery system of claim 9 wherein a second of said regulatory chambers is operatively connected to said high pressure source.

11. The vapor recovery system of claim 10 wherein said pressure regulation means further includes a plurality of flow chambers and a regulating valve means operatively connected to said regulating diaphragm member,

a first of said flow chambers being in communication with said interior portion of said conduit means,

a second of said flow chambers being in communication with said fluid outlet,

said valve means being positioned to selectively allow fluid flow between said first and said second flow chambers based on the urging of said biasing means and the pressure differential existing between said first regulatory chamber and said second regulatory chamber.

12. A vapor recovery system for transmission of vapors from a vapor source to a vapor combustion chamber comprising:

a canister means for storage of vapors, said canister means having a fluid inlet operatively connected to a first high pressure source, a fluid outlet operatively connected to a low pressure source, conduit means for passage of fluid between said fluid inlet and said fluid outlet, and a control means for opening and closing said conduit means to permit flow from said first high pressure source to said low pressure source,

said control means being a single, integrated, multifunctional unit including a proportional solenoid valve means for providing an output differential pressure in controlled response to a variable electrical input, regulating means for regulating the pressure in an interior portion of said conduit means, and valve means for selectively allowing fluid flow from said fluid inlet to said fluid outlet,

energization of said solenoid valve by variation of the electrical input being effective to cause modulation of said output differential pressure and opening of said valve means thereby permitting flow from said fluid inlet to said fluid outlet to provide transmission of vapors from said vapor source to said combustion chamber.

Fig. 1

Fig. 2

# Fig. 3

# Fig. 4

# Fig. 5

EP 0 462 824 A1

Legend:
- X 20 in. HG
- △ 16 in. HG
- ○ 12 in. Hg
- □ 8 in. Hg
- ◇ 5 in. Hg

# Fig. 6

# Fig. 7

# Fig. 8

# Fig. 9

European Patent Office

**EUROPEAN SEARCH REPORT**

Application Number

EP 91 30 5556

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4308842 (WATANABE ET AL.)<br>* column 1, lines 34 - 40 *<br>* column 2, lines 48 - 60 *<br>* column 3, lines 13 - 30; figure 1 *<br>--- | 1, 5, 12 | F02M25/08 |
| A | GB-A-2044848 (NISSAN MOTOR COMPANY)<br>* page 2, lines 67 - 81; figures 1, 1a *<br>--- | 1, 5, 12 | |
| A | PATENT ABSTRACTS OF JAPAN<br>vol. 10, no. 14 (M-447)(2071) 21 January 1986,<br>& JP-A-60 175757 (NISSAN JIDOSHA K.K.) 09<br>September 1985,<br>* the whole document *<br>--- | 1, 5, 12 | |
| D,A | US-A-4715396 (FOX)<br>* column 1, lines 12 - 58; figure 2 *<br>--- | 1, 5, 12 | |
| A | US-A-4750465 (REDIKER,JR. ET AL.)<br>----- | | |
| | | | **TECHNICAL FIELDS SEARCHED (Int. Cl.5)**<br><br>F02M |

The present search report has been drawn up for all claims

| Place of search | Date of completion of the search | Examiner |
|---|---|---|
| THE HAGUE | 12 SEPTEMBER 1991 | ALCONCHEL Y UNGRIA J |